# EUROPEAN PATENT APPLICATION

(11) **EP 3 136 657 A1**
(43) Date of publication of application: **01.03.2017**
(21) Application number: 16161265.0
(22) Date of filing: 18.03.2016
(51) Int. Cl.: H04L 12/58

(54) **METHOD AND DEVICE FOR PROCESSING A COMMUNICATION MESSAGE**

(30) Priority: 26.08.2015 CN 201510532207
(71) Applicant: Xiaomi Inc., Beijing 100085 (CN)
(72) Inventor: ZHANG, Liang, 100085 Beijing (CN); WU, Liangxiong, 100085 Beijing (CN); WANG, Ke, 100085 Beijing (CN)
(74) Representative: Sackin, Robert

(57) **Abstract**

The present disclosure relates to a method and device for processing a communication message, and belongs to the field of communication technology. The method may include: acquiring(201)a communication message transmitted between a first terminal and a second terminal, determining (202) whether the communication message includes a preset schedule word, sending (203) prompt information to at least one of the first terminal and the second terminal when the communication message is determined to include a preset schedule word, and presenting the prompt information when the at least one of the first terminal and the second terminal receives the prompt information. With the present disclosure, when two users are negotiating a schedule, at least one user thereof is reminded to acquire contact information of the other user such that the reminded user is able to communicate with the other user based on the acquired contact information.

## Description

### TECHNICAL FIELD

The present disclosure generally relates to the field of communication, and more particularly, to a method and device for processing a communication message.

### BACKGROUND

As network technology has developed, a social media application has become a popular means for communicating amongst users. Two users may negotiate a certain appointment by using a social media application when they need to determine it.

Taking a first user and a second user as an example, the first user may send a communication message to the second user based on an account number of the second user, while the second user may also send a communication message to the first user based on an account number of the first user. When the two users plan an appointment, the first user may send specific information, e.g., the time and the place for the appointment, to the second user by using a social media application. The second user may acknowledge the specific information, or change the specific information after viewing it and then send the changed information back to the first user. In subsequent processes, the first user may call the second user to confirm the current location of the second user when the first user arrives at the appointed place at the appointed time.

### SUMMARY

According to a first aspect of the present disclosure, there is provided a method for processing a communication message including acquiring a communication message transmitted between a first terminal and a second terminal; determining whether the communication message includes a preset schedule word; and sending prompt information to at least one of the first terminal and the second terminal when the communication message is determined to include a preset schedule word, the prompt information reminding a user of the at least one of the at least one of the first terminal and the second terminal to get contact information of a user of the other terminal.

In an exemplary embodiment, said acquiring a communication message transmitted between the first terminal and the second terminal includes: receiving a communication message sent by the first terminal to the second terminal; or receiving a communication message sent by the second terminal to the first terminal.

In an exemplary embodiment, before determining whether the communication message includes a preset schedule word, the method includes: determining whether the communication message is a text message; and converting the communication message to a text message when the communication message is determined not to be a text message.

In an exemplary embodiment, said determining whether the communication message includes a preset schedule word includes: acquiring at least one word from the communication message using a word segmentation algorithm; determining whether the at least one word belongs to a preset schedule word set that stores the preset schedule words; and determining that the communication message includes a preset schedule word when any one of the at least one word is determined to belong to the preset schedule word set.

In an exemplary embodiment, said sending prompt information to at least one of the first terminal and the second terminal when the communication message is determined to include a preset schedule word includes: sending a query request to the first terminal includes at least a second user identification when the communication message is determined to include a preset schedule word, such that the first terminal searches for contact information corresponding to the second user identification upon reception of the query request; and sending the prompt information to the first terminal when query failure information from the first terminal is received.

In an exemplary embodiment, said sending prompt information to at least one of the first terminal and the second terminal when the communication message is determined to include a preset schedule word includes: sending a query request to the second terminal including at least a first user identification when the communication message is determined to include a preset schedule word, such that the second terminal searches for contact information corresponding to the first user identification upon reception of the query request; and sending the prompt information to the second terminal when query failure information from the second terminal is received.

In an exemplary embodiment, said sending prompt information to at least one of the first terminal and the second terminal when the communication message is determined to include a preset schedule word includes: acquiring second data information corresponding to the second terminal when the communication message is determined to include a preset schedule word; determining whether the second data information includes the contact information; and sending the prompt information to the first terminal when the second data information is determined not to include the contact information.

In an exemplary embodiment, said sending prompt information to at least one of the first terminal and the second terminal when the communication message is determined to include a preset schedule word includes: acquiring first data information corresponding to the first terminal when the communication message is determined to include a preset schedule word; determining whether the first data information includes the contact information; and sending the prompt information to the second terminal when the first data information is determined not to include the contact information.

According to a second aspect of the present disclosure, there is provided a method for processing a communication message performed at a terminal including: acquiring a communication message transmitted with a second terminal; determining whether the communication message includes a preset schedule word; and outputting prompt information when the communication message is determined to include a preset schedule word, the prompt information reminding a user of the terminal to get contact information of a user of the second terminal.

In an exemplary embodiment, said determining whether the communication message includes a preset schedule word includes acquiring at least one word from the communication message using a word segmentation algorithm; determining whether the at least one word belongs to a preset schedule word set that stores the preset schedule words; and determining that the communication message includes a preset schedule word when any one of the at least one word is determined to belong to the reset schedule word set.

In an exemplary embodiment, said outputting prompt information includes: searching for contact information corresponding the second terminal; and outputting the prompt information when the query fails.

In an exemplary embodiment, said outputting prompt information includes: sending a first request to the server when the communication message is determined to include a preset schedule word, the first request is to acquire second data information corresponding to the second terminal from a server; determining whether the second data information includes the contact information upon reception of the second data information corresponding to the second terminal; and outputting the prompt information when the second data information is determined not to include the contact information.

According to a third aspect of the present disclosure, there is provided a device for processing a communication message including an acquiring module configured to acquire a communication message transmitted between a first terminal and a second terminal; a determining module configured to determine whether the communication message includes a preset schedule word; an information sending module configured to send prompt information to at least one of the first terminal and the second terminal when the communication message is determined to include a preset schedule word, the prompt information reminding a user of the at least one of the first terminal and the second terminal to get contact information of a user of the other terminal.

In an exemplary embodiment, said acquiring module is further configured to receive a communication message sent by the first terminal to the second terminal; or receive the communication message sent by the second terminal to the first terminal.

In an exemplary embodiment, the device further including a text determining module configured to determine whether the communication message is a text message; and a conversion module configured to convert the communication message to a text message when the communication message is determined not to be a text message.

In an exemplary embodiment, said determining module is further configured to acquire at least one word from the communication message using a word segmentation algorithm; determine whether the at least one word belongs to a preset schedule word set that stores the preset schedule words; and determine that the communication message includes a preset schedule word when any one of the at least one word is determined to belong to the reset schedule word set.

In an exemplary embodiment, the information sending module is further configured to send a query request to the first terminal including at least a second user identification when the communication message is determined to include a preset schedule word, such that the first terminal searches for contact information corresponding to the second user identification upon reception of the query request; and send the prompt information to the first terminal when query failure information from the first terminal is received.

In an exemplary embodiment, said information sending module is further configured to send a query request to the second terminal including at least a first user identification when the communication message is determined to include a preset schedule word, such that the second terminal searches for contact information corresponding to the first user identification upon reception of the query request; and send the prompt information to the second terminal when query failure information from the second terminal is received.

In an exemplary embodiment, the information sending module is further configured to acquire second data information corresponding to the second terminal when the communication message is determined to include a preset schedule word; determine whether the second data information includes the contact information; and send the prompt information to the first terminal when the second data information is determined not to include the contact information.

In an exemplary embodiment, the information sending module is further configured to acquire first data information corresponding to the first terminal when the communication message is determined to include a preset schedule word; determine whether the first data information includes the contact information; and send the prompt information to the second terminal when the first data information is determined not to include the contact information.

According to a fourth aspect of embodiments of the present disclosure, there is provided a device for processing a communication message including an acquiring module configured to acquire a communication message transmitted with a second terminal; a determining module configured to determine whether the communication message includes a preset schedule word; and an output module configured to output prompt information when the communication message is determined to include a preset schedule word, the prompt information reminding a user of the device to get contact information of a user of the second terminal.

In an exemplary embodiment, said determining module is further configured to acquire at least one word from the communication message using a word segmentation algorithm; determine whether the at least one word belongs to a preset schedule word set that stores the preset schedule words; and determine that the communication message includes a preset schedule word when any one of the at least one word is determined to belong to the reset schedule word set.

In an exemplary embodiment, the output module is further configured to search for contact information corresponding to the second terminal; and outputting the prompt information when the query fails.

In an exemplary embodiment, the output module is further configured to send a first request to the server when the communication message is determined to include a preset schedule word, the first request requesting from second data information corresponding to the second terminal; determine whether the second data information includes the contact information upon reception of the second data information corresponding to the second terminal; and output the prompt information when the second data information is determined not to include the contact information.

According to a fifth aspect of embodiments of the present disclosure, there is provided a device for processing a communication message including a processor; and a memory for storing instructions executable by the processor; wherein the processor is configured to: acquire a communication message transmitted between a first terminal and a second terminal; determine whether the communication message includes a preset schedule word; and send prompt information to at least one of the first terminal and the second terminal when the communication message is determined to include a preset schedule word, the prompt information reminding a user of the at least one of the first and the second terminal to get contact information of a user of the other terminal.

According to a sixth aspect of embodiments of the present disclosure, there is provided a device for processing a communication message including a processor; and a memory for storing instructions executable by the processor; wherein the processor is configured to: acquire a communication message transmitted with a second terminal; determine whether the communication message includes a preset schedule word; and output prompt information when the communication message is determined to include a preset schedule word, the prompt information reminding a user of the device to get contact information of a user of the second terminal.

The technical solutions provided by embodiments of the present disclosure may provide at least some of the following beneficial effects:
by acquiring a communication message transmitted between a first terminal and a second terminal, determining whether the communication message includes a preset schedule word, and sending prompt information to at least one of the first terminal and the second terminal when the communication message is determined to include a preset schedule word, at least one of the first terminal and the second terminal may output the prompt information when receiving it such that at least one user thereof is reminded to get contact information of the other user when the two users are negotiating a schedule, and the reminded user may communicate with the other user based on the acquired contact information, which avoids communication inconvenience due to non-acquisition of the contact information of the other user.

It is to be understood that both the forgoing general descriptions and the following detailed descriptions are exemplary and explanatory only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram showing an interactive system according to an exemplary embodiment.
Fig. 2 is a flow chart showing a method for processing a communicating message according to an exemplary embodiment.
Fig. 3 is a flow chart showing a method for processing a communicating message according to an exemplary embodiment.
Fig. 4A is a block diagram illustrating a device for processing a communication message according to an exemplary embodiment.
Fig. 4B is a block diagram illustrating a device for processing a communication message according to an exemplary embodiment.
Fig. 5 is a block diagram illustrating a device for processing a communication message according to an exemplary embodiment.
Fig. 6 is flow chart showing a method for processing a communication message according to an exemplary embodiment.
Fig.7 is flow chart showing a method for processing a communication message according to an exemplary embodiment.
Fig. 8 is a block diagram illustrating a device for processing a communication message according to an exemplary embodiment.
Fig. 9 is a block diagram illustrating a device for processing a communication message according to an exemplary embodiment.

### DETAILED DESCRIPTION

In order for clearly clarifying the purposes, the technical solutions and advantages of the disclosure, some implementations of the disclosure will be further described in details by reference to the appended drawings. Here, the exemplary embodiments and the description of the present disclosure are for explanation but not limitation.

The disclosure provides a method and device for processing a communication message, which will be described in details by reference to the appended drawing.

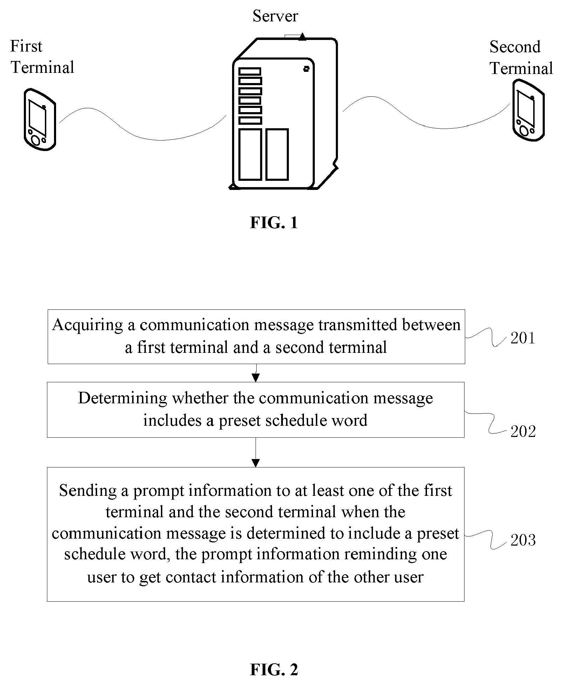

Fig. 1 is a block diagram showing an interactive system according to an exemplary embodiment. As shown in Fig. 1, the interactive system may include: a first terminal, a second terminal, and a server. The first terminal may be connected with the server via a network, and the second terminal may be connected with the server via a network.

The first terminal and the second terminal may transmit a communication message through the server. The communication message may be sent by the first terminal to the second terminal or sent by the second terminal to the first terminal.

For example, the first terminal sends a communication message to the server, the server forwards the communication message to the second terminal when receiving a communication message, and the second terminal shows the communication message when receiving the communication message. Alternatively, the second terminal sends a communication message to the server, the server forwards the communication message to the first terminal when receiving the communication message, and the first terminal shows the communication message when receiving the communication message.

The server may acquire the communication message transmitted between the first terminal and the second terminal, determine whether the communication message includes a preset schedule word, and send prompt information to at least one of the first terminal and the second terminal when the communication message is determined to include a preset schedule word, the prompt information may remind a user of the at least one of the first terminal and the second terminal to get contact information of a user of the other terminal.

The first terminal may show the prompt information sent by the server when receiving the prompt information. The second terminal may show the prompt information sent by the server when receiving the prompt information.

According to the system provided by the embodiment, by acquiring communication message transmitted between a first terminal and a second terminal, determining whether the communication message includes a preset schedule word, and sending prompt information to at least one of the first terminal and the second terminal when the communication message is determined to include a preset schedule word, at least one of the first and second terminals that receives the prompt information is able to show the prompt information to remind its user to acquire the contact information of the other user when the two users are negotiating a schedule and the reminded user may communicate with the other user based on the acquired contact information, which avoids communication inconvenience due to non-acquisition of the contact information of the other user.

Fig. 2 is a flow chart showing a method for processing a communicating message according to an exemplary embodiment. As shown in Fig. 2, the method for processing a communication message may be performed by a server, and may include the following steps.

In step 201, a communication message transmitted between a first terminal and a second terminal is acquired.

In step 202, a determination as to whether the communication message includes a preset schedule word is made.

In step 203, prompt information is sent to at least one of the first terminal and the second terminal when the communication message is determined to include a preset schedule word, the prompt information may remind a user of the at least one of the first terminal and the second terminal to get contact information of a user of the other terminal.

With the method provided by the embodiment, by acquiring a communication message transmitted between a first terminal and a second terminal, determining whether the communication message includes preset schedule word, and sending prompt information to at least one of the first terminal and the second terminal when the communication message is determined to include a preset schedule word, at least one of the first and second terminals that receives the prompt information is able to present the prompt information to remind its user to acquire the contact information of the other user when the two users are negotiating a schedule and the reminded user may communicate with the other user based on the acquired contact information, which avoids communication inconvenience due to non-acquisition of the contact information of the other user.

In an exemplary embodiment, said acquiring a communication message transmitted between the first terminal and the second terminal may include:
receiving a communication message sent by the first terminal to the second terminal; or
receiving a communication message sent by the second terminal to the first terminal.

In an exemplary embodiment, before determining whether the communication message includes a preset schedule word, the method may include:
determining whether the communication message is a text message; and
converting the communication message to a text message when the communication message is determined not to be a text message.

In an exemplary embodiment, said determining whether the communication message includes a preset schedule word may include:
acquiring at least one word from the communication message using a word segmentation algorithm;
determining whether the at least one word belongs to a preset schedule word set that stores the preset schedule words; and
determining that the communication message includes a preset schedule word when any one of the at least one word is determined to belong to the reset schedule word set.

In an exemplary embodiment, said sending prompt information to at least one of the first terminal and the second terminal when the communication message is determined to include a preset schedule word may include:
sending a query request to the first terminal including at least a second user identification when the communication message is determined to include a preset schedule word, such that the first terminal searches for contact information corresponding to the second user identification upon reception of the query request; and
sending the prompt information to the first terminal when query failure information from the first terminal is received.

In an exemplary embodiment, said sending prompt information to at least one of the first terminal and the second terminal when the communication message is determined to include a preset schedule word may include:
sending a query request to the second terminal including at least a first user identification when the communication message is determined to include a preset schedule word, such that the second terminal searches for contact information corresponding to the first user identification upon reception of the query request; and
sending the prompt information to the second terminal when query failure information from the second terminal is received.

In an exemplary embodiment, said sending prompt information to at least one of the first terminal and the second terminal when the communication message is determined to include a preset schedule word may include:
acquiring second data information corresponding to the second terminal when the communication message is determined to include a preset schedule word;
determining whether the second data information includes the contact information; and
sending the prompt information to the first terminal when the second data information is determined not to include the contact information.

In an exemplary embodiment, said sending prompt information to at least one of the first terminal and the second terminal when the communication message is determined to include a preset schedule word may include:
acquiring first data information corresponding to the first terminal when the communication message is determined to include a preset schedule word;
determining whether the first data information includes the contact information; and
sending the prompt information to the second terminal when the first data information is determined not to include the contact information.

All the optional technical solutions described above may form the optional embodiments of the disclosure in any combination, which will not be elaborated herein.

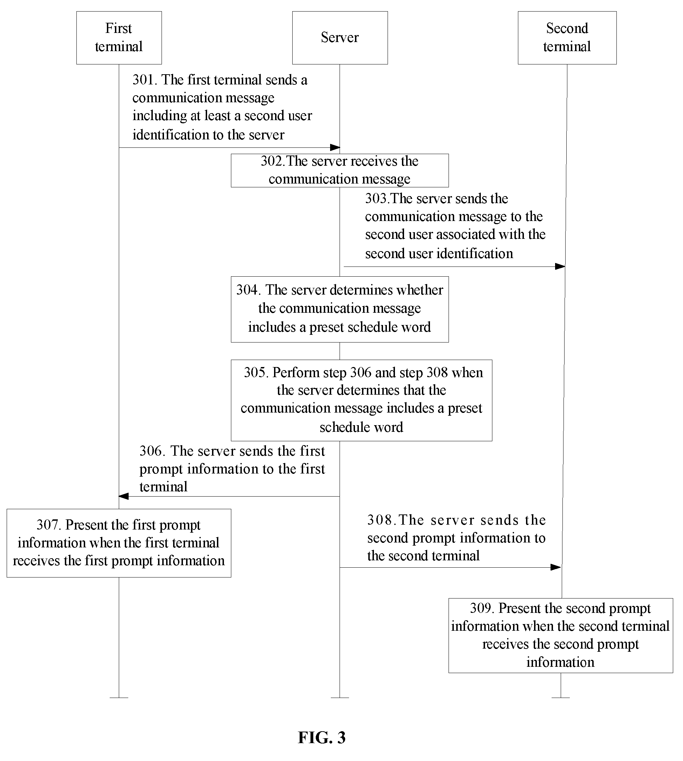

Fig. 3 is a flow chart showing a method for processing communicating message according to an exemplary embodiment. As shown in Fig. 3, the method for processing a communication message may be implemented by a first terminal, a second terminal and a server, and may include the following steps.

In step 301, the first terminal sends a communication message including at least a second user identification to the server.

In step 302, the server receives the communication message.

The first terminal and the second terminal may be computer, handset and the like, which is not limited by the embodiment. The first and second terminals may both install a social application, e.g., an instant messaging application, an information show application and the like, and connect to the server by the social application. Accordingly, the server may be an instant messaging server, an information show application and the like, which is not limited by the embodiment.

The first terminal and the second terminal may transmit a communication message by a social application. Taking the first terminal sending a communication message to the second terminal as an example, based on the first user identification, the first terminal logins the server which maintains the user relationship chain for the first user identification, and the first terminal may acquire the user relationship chain of the first user identification by the social application and show the user relationship chain. When a selection operation for the second user identification of the user relationship chain made by the first user is detected by the first terminal, the first terminal may open the interactive interface with the second user identification, acquire the communication message inputted by the first user in the interactive interface and send the communication message to the server, then the server may send the communication message to the second terminal including the second user identification, the communication message includes the second user identification and indicates that the communication message is the one sent by the first terminal to the second terminal.

Illustratively, the first user identification uniquely identifying the first user may be the nickname, the account number of the first user and the like. The second user identification uniquely identifying the second user may be the nickname, the account number of the second user and the like. The interactive interface between the first user and the second user may be an instant messaging window or an email editing interface and the like, which is not limited by the embodiment.

In addition, with respect to the communication message, it may be an instant messaging message, an information show message and the like in terms of type. In terms of format, the communication message may be a text message (a short message service (SMS) message), a voice message, a video message, and the like. In terms of content, the communication message may include the words for showing schedule, hot news, traffic and the like, which is not limited by the embodiment.

In step 303, the server sends the communication message to the second user associated with the second user identification.

According to the second user identification, the server may determine the second terminal associated with the second user identification and send the communication message to the second terminal. In one embodiment, the communication message may include the first user identification, and the second terminal may present the communication message when receiving the communication message. The second user may view the first user identification to learn that the communication message is sent by the first user.

In step 304, the server determines whether the communication message includes a preset schedule word.

In the processes of practical applications, when negotiating a schedule, the first user and the second user may achieve the negotiation process by transferring communication messages. In the negotiation process, the two users both interact based on the corresponding user identifications.

In consideration of one user may need contact information the other user for contact when having activities following the schedule after the schedule negotiation of the first user with the second user. However, the user may only acquire the user identification of the other user during the negotiation, but acquiring the contact information of the other user may not be guaranteed. Thus, if one of the users doesn't acquire the contact information of the other user, he or she can not directly contact with the other user later, which causes inconvenience. Therefore, the server may remind the user to get the contact information of the other user before determining that the first user and the second user are negotiating a schedule.

In order to determine whether the first user and the second user are negotiating a schedule, the server may determine whether the communication message includes a preset schedule word when receiving the communication message. According to one embodiment of the disclosure, the server may determine that the first user and the second user are negotiating schedule when the communication includes a preset schedule word, then one of the first user and the second user may be reminded to acquire the contact information of the other user. According to another embodiment of the disclosure, the server may determine the first user and the second user are not negotiating a schedule when the communication doesn't include a preset schedule word, then there is no need to remind the first user or the second user to acquire the contact information of the other user.

Illustratively, the preset schedule words refer to the words indicating schedule which may be activity time, activity place, activity sponsors, activity participants of a schedule, and the like. And the preset schedule words may be acquired in advance by sampling the words for the general users negotiating a schedule through the server, or determined by the rules satisfied by the words for the general users negotiating a schedule. For example, the preset schedule words may be "see you in cinema""see you then" , or the words satisfying the rules which may be "see you at * o'clock" "**cinema" , and the like. One word may be taken as the preset schedule word if the word satisfies the preset rules.

The server may determine whether the communication message includes a preset schedule word based on a preset schedule word set that stores preset schedule words and may include one or more preset schedule words. One word may be considered as a preset schedule word if the preset schedule word set includes the word, and one word may not be considered as the preset schedule word if the preset schedule word set doesn't include the word.

The server may acquire the at least word from the communication message using a word segmentation algorithm to segment the word. The server may further determine whether the at least one word belongs to the preset schedule word set. In one embodiment, the server may determines that the communication includes a preset schedule word when any one of the at least one word belongs to the preset schedule word set. In another embodiment, the server may determine that the communication doesn't include a preset schedule word when any one of the at least one word doesn't belong to the preset schedule word set.

Illustratively, with respect to every word in the at least one word, the server may determine if the word belongs to the preset schedule word set, and it may be determined that the communication message includes a preset schedule word if the word belongs to the preset schedule word set. However, if the word doesn't belong to the preset schedule word set, the server may continue to repeat the steps above for the next word in the at least one word, and determine that the communication message includes a preset schedule word until the current word is determined to belong to the preset schedules word set, or determine that the communication message doesn't include a preset schedule word until the at least one word is determined not to belong to the preset schedule word set.

In one embodiment, when determining whether the words in the communication message belong to the preset schedule word set, it needs to be determined if every word in the communication message matches with every preset word of the preset schedule word set. Illustratively, the preset schedule word set may include multiple preset schedule words which may have different use frequency. Some preset schedule words have a low use frequency and are merely included by the communication message, so when the server determines if the words in the communication message match with the preset schedule words with low use frequency, there's a high probability of the determined result being unmatched, then the determining process causes unnecessary waste of resources.

In order to improve the matching efficiency and avoid wasting resources, the preset schedule word set may include a first preset schedule word set including the preset schedule words with high use frequency and a second preset schedule word set including the reset schedule words with low use frequency. In one embodiment, when the server acquires the at least one word of the communication message, determining if the at least one word belongs to the first preset schedule word set may be done firstly, and if any one of the at least one word belongs to the first preset schedule word set, there's no need to match the at least one word with the preset schedule words in the second preset schedule word set, the communication message includes a preset schedule word may be determined directly. In one embodiment, the server may determine if every of the at least one word belongs to the second preset schedule word set only when every of the at least one word doesn't belong to the first preset schedule word set. If any one of the at least one word belongs to the second preset schedule word set, the communication message is determined to include a preset schedule word. And If every of the at least one word doesn't belong to the second preset schedule word set, the communication message is determined not to include a preset schedule word.

In an exemplary embodiment, the words in the communication message is to be matched with the preset schedule words in the second preset schedule word set only when the communication message includes the preset schedule words with low use frequency. According to one embodiment of the disclosure, when the communication message doesn't include the preset schedule words with low use frequency but includes the preset schedule words with high use frequency, just match the words in the communication message with the preset schedule words in the first preset schedule word set, so as to save the matching time, improve matching efficiency and avoid wasting resources.

Illustratively, the preset schedule word set may be stored by the said server or specified servers other than said server, which is not limited by the embodiment. If the preset schedule word set is stored by the said server, the said server may directly access to the preset schedule word set and determine if the at least one word belongs to the preset schedule word set. If the preset schedule word set is stored by the specified servers other than the said server, the said server may invoke the interface with the specified server and send a query request including the at least one word to the specified server. The specified server may access to the preset schedule word set, determine if the at least one word belongs to the preset schedule word set when the query request is received, and send the determined result back to the said server, then the said server may determine if the preset schedule word set includes a preset schedule word based on the determined result.

With respect to the first and second sets of preset schedule word, they may be both stored in the server or the specified server, or the first preset schedule word set is stored on the said server and the second preset schedule word set is stored on the specified server, which is not limited by the embodiment.

It should be noted that the embodiment just illustrates that the communication message is a text message, so the server may segment the words directly. But if the communication message is not a text message, it can be converted to a text message for conveniently determining the words in the communication message. That is, the server may determine if the communication message is a text message firstly when the communication message is received. The server may use a word segmentation algorithm directly to acquire the at least one word from the communication message when the communication message is a text message. However, if the communication message is not a text message, the server may convert the communication message to a text message. For example, the server may extract the voice message in the communication message, convert the voice message to a text message using voice recognition technology, and then segment the converted text message using the word segmentation algorithm to acquire the at least one word.

It should be noted that the embodiment illustrates that step 304 is performed after step 303, but in the practice application, step 303 has no inevitable timing relationship with step 304, that is, step 303 and step 304 may be performed simultaneously or in tandem, which is not limited by the embodiment.

In step 305, step 306 and step 308 are performed when the server determines that the communication message includes a preset schedule word.

The first user and the second user are negotiating a schedule is determined when the server determines that the communication message includes a preset schedule word. Illustratively, the server may send prompt information to the at least one of the first terminal and the second terminal, the prompt information reminds a user of the at least one of the first terminal and the second terminal to get contact information of a user of the other terminal. For example, the server may send the prompt information to the first terminal for reminding the first user to get the contact information of the second user, or the server may send the prompt information to second terminal for reminding the second user to get the contact information of the first user.

In one embodiment, the server may determine if the first user or the second user has already acquired the contact information of the other user firstly. Illustratively, there is no need to send the prompt information to the first terminal if the first user has already acquired the contact information of the second user; and there is no need to send the prompt information to the second terminal if the second user has already acquired the contact information of the first user.

Accordingly, step 305 may include at least one of the following steps (1) - (4).
(1) the server may send the query request including at least the second user identification to the first terminal when the sever determines that the communication message includes a preset schedule word, the first terminal may search for the contact information corresponding to the second user identification when receiving the query request and send query failure information to the server if the contact information corresponding to the second user identification is not founded, and the server may perform step 306 when receiving the query failure information.
   The first terminal stores an address book which may include multiple users' contact information. Illustratively, the contact information of every user may include phone number, office address, home address, user nickname, user account number and the like, which is not limited by the embodiment. When the first terminal receives the query request, querying the contact information corresponding to the second user identification in the address book.
   For example, the first terminal may acquire the remark name assigned for the first user identification in advance to determine if the address book includes the contact information of the remark name. Illustratively, the query success information is sent to the server if the first terminal determines that the address book includes the contact information of the remark name and received by the server to indicate that the first user has already acquired the contact information of the second user and there is no need to send the prompt information to the first terminal. However, the query failure information is sent to the server if the first terminal determines that the address book doesn't includes the contact information of the remark name and received by the server to indicate that the first user hasn't acquired the contact information of the second user and the prompt information should be sent to the first terminal to remind the first user to acquire the contact information of the second user.
(2) The second data information corresponding to the second terminal is acquired when the communication message is determined to include a preset schedule word by the server, and a determination as to if the second data information includes the contact information is made. Step 306 is performed when the second data information is determined not to include the contact information.
   In practical applications, the server may store the data information corresponding to every user identification which may include contact information, head portrait, chat history of the user and the like, which is not limited by the embodiment.
   The first user and the second user may both view the data information of the other user, taking the first user viewing the data information of the second user as an example, the first user may trigger the data view operation for the second user identification on the first terminal, and the first terminal may send the data information acquisition request including the second user identification to the server when detecting the data view operation. The server may acquire the second data information corresponding to the second data identification when receiving the data information acquisition request, and send the second data information to the first terminal. The first terminal presents the second data information when receiving the second data information, then the first user may view the second data information.
   In the embodiment, in order to determine if the first user has already acquired the contact information of the second user, the server may determine if the second data information includes the contact information. The first user may acquire the contact information by viewing the second data information if the second data information includes the contact information, so it may be considered that the first user has already acquired the contact information of the second user. At this moment, the server needs not to send the prompt information to the first terminal. However, if the second data information doesn't include the contact information, it indicates that the first user may not acquire the contact information of the second user when viewing the second data information, so the server needs to send the prompt information to the first terminal.
(3) When determining that the communication message includes a preset schedule word, the server may send a query request to the first terminal which includes at least the second user identification, acquire the second data information corresponding to the second terminal, and determine if the second data information includes the contact information. When the server receives the query failure information from the first terminal and determines that the second data information doesn't include the contact information, step 306 performed.
(4) The server may determine if the communication message includes the contact information. When the communication message is determined not to include the contact information, step 306 is performed.
   For example, the server may determine if the communication message includes the 11-bit continuous numbers indicating phone number, or determine if the communication message includes any words indicating contact information, for example, "phone number" "mobile number" and the like. When the communication message is determined not to include the 11-bit continuous numbers and the words indicting the contact information, step 306 is performed.
   In addition, in order to determine if the second user has already acquired the contact information of the first user, step 305 may further include any one of the following steps (5) - (8).
(5)When determining that the communication message includes a preset schedule word, the server may send a query request including at least the first user identification to the second terminal, the second terminal may search for the contact information corresponding to the first user identification when receiving the query request and send query failure information to the server when the contact information corresponding to the first user identification is not founded, and step 308 is performed when the server receives the query failure information.
(6) When determining that the communication message includes a preset schedule word, the server may acquire the first data information corresponding to the first terminal, and determine if the first data information includes the contact information. When the first data information is determined not to include the contact information, step 308 is performed.
(7) When determining that the communication message includes the preset schedule word, the server may acquire the first data information corresponding to the first terminal, and determine if the first data information includes the contact information. When the first data information is determined not to include the contact information, step 308 is performed.
(8) The server determines if the communication message includes the contact information. When the communication message is determined not to include the contact information, step 308 is performed.

The specific processes of steps (5) - (8) are the similar to the steps (1) - (4) above, which will not be elaborated herein.

In step 306, the server sends first prompt information to the first terminal.

Illustratively, the first prompt information reminding the first user to acquire the contact information of the second user may be an instant messaging message or email and the like, which is not limited by the embodiment.

For example, the first prompt information may be "currently you are negotiating a dating matter, please make sure you have the phone number of the other side so as to avoid inconveniencing your appointment."

In step 307,the first prompt information is presented when the first terminal receives the first prompt information.

A prompt window presenting the first prompt information is popped up or the interactive interface with the second terminal in which showing the first prompt information is shown when the first terminal receives the first prompt information.

The first user may view the first prompt information when the first terminal shows the first prompt information, and acquire the contact information of the second user based on the first prompt information.

In step 308, the server send second prompt information to the second terminal.

The second prompt information reminding the second user to acquire the contact information of the first user may be an instant messaging message or email and the like, which is not limited by the embodiment.

In step 309, the second prompt information is presented when the second terminal receives the second prompt information.

A prompt window presenting the second prompt information is popped up or the interactive interface with the first terminal in which showing the first prompt information is presented when the first terminal receives the second prompt information.

The second user may view the second prompt information when the second terminal presents the second prompt information, and acquire the contact information of the first user based on the second prompt information.

It should be noted that the embodiment only illustrates that the server may send the first prompt information to the first terminal and send the second prompt information to the second terminal, but in the processes of practical applications, the server may only send the first prompt information to the first terminal or only send the second prompt information the second terminal. The terminal to which the prompt information is sent may be determined by performing at least one of steps (1) - (8), or the server may have a default setting that the prompt information could be sent to the terminal initiating the communication message or a default setting that the prompt information could be sent to the terminal receiving the communication message or a default setting that the prompt information could be sent to the terminal receiving the communication message and the terminal initiating the communication message both, which is not limited by the embodiment. In addition, the steps by which the server send the first prompt information to the first terminal have no inevitable timing relationship with the steps by which the server send the second prompt information to the second terminal, they may be performed simultaneously or in tandem, which is not limited by the embodiment.

In one embodiment, the first user and the second user may continue to negotiate the schedule in the subsequent processes, so the serve may still receive the communication message including preset schedule words, and then the prompt information may be sent to the user again which results in sending the prompt information repeatedly and may bother the user. Therefore, When the server determines that the communication message includes a preset schedule word, if a communication message sent by the first terminal to the second terminal or a communication message sent by the second terminal to the first terminal again is received in a preset duration, the server wouldn't perform above steps 304-308 again but forward the communication message directly. The preset duration may be one day, 12 hours and the like, which is not limited by the embodiment.

It should be noted that the embodiment just illustrates that the server receives the communication message sent by the first terminal to the second terminal, but in the processes of practical applications, the above steps 304-308 may be performed when the server further receive the communication sent by the second terminal to the first terminal, which will not be discussed in detail herein.

In daily life, when two users negotiate a dating matter such as meeting, dining, watching movie by a social application, they focus on the information such as appointment time, place generally. At this time, users probably ignore if they have the contact information of the other user, especially phone number. If one user has no the contact information of the other user, he or she cannot contact with the other user when going for the appointment later on, or the user cannot tell the other user in time that he or she cannot make the appointment due to emergency matters, which may cause inconvenience. Using the method provided by the embodiment, one user may be reminded to get the contact information of the other user when they negotiate a dating matter, and the method takes into account the demand for communication after the negotiation for the dating matter, which improves user experience.

With the method provided by the embodiment determines whether the communication message includes a preset schedule word by acquiring the communication message transmitted between a first terminal and a second terminal, and sending prompt information to at least one of the first terminal and the second terminal when the communication message is determined to include a preset schedule word, at least one of the first and second terminals that receives the prompt information, is able to present the prompt information to remind its user to acquire the contact information of the other user when the two users are negotiating a schedule, and the reminded user may communicate with the other user based on the acquired contact information, which avoids communication inconvenience due to non-acquisition of the contact information of the other user.

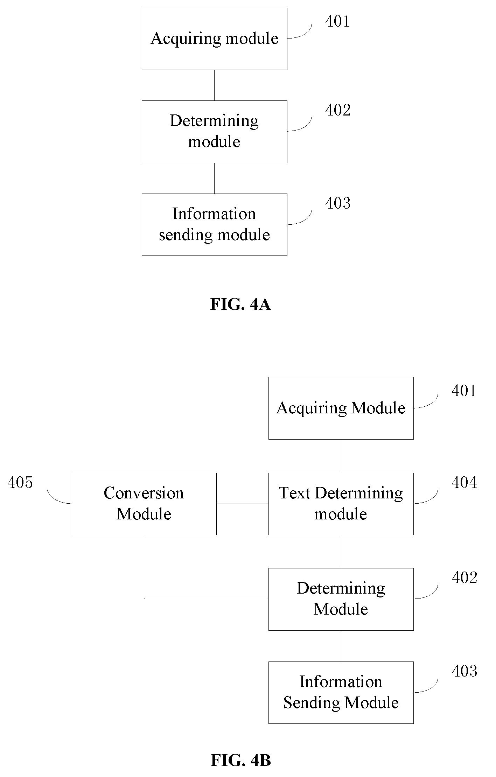

Fig. 4A is a block diagram illustrating a device for processing a communication message according to an exemplary embodiment. As shown in Fig. 4A, the device may include an acquiring module 401, a determining module 402 and the information sending module 403.

The acquiring module is configured to acquire the communication message transmitted between the first terminal and the second terminal.

The determining module 402 is configured to determine if the communication message includes a preset schedule word.

The information sending module 403 is configured to send prompt information to at least one of the first terminal and the second terminal when the communication message is determined to include a preset schedule word, the prompt information reminds user of the at least one of the first terminal and the second terminal to get contact information of a user of the other terminal.

With the device provided by the embodiment, by acquiring communication message transmitted between a first terminal and a second terminal, determining whether the communication message includes a preset schedule word, and sending prompt information to at least one of the first terminal and the second terminal when the communication message is determined to include a preset schedule word, at least one of the first and second terminals that receives the prompt information is able to present the prompt information to remind its user to acquire the contact information of the other user when the two users are negotiating a schedule and the reminded user may communicate with the other user based on the acquired contact information, which avoids communication inconvenience due to non-acquisition of the contact information of the other user.

In an exemplary embodiment, the acquiring module 401 is further configured to receive the communication message sent by the first terminal to the second terminal; or receive the communication message sent by the second terminal to the first terminal.

Referring to Fig. 4B, in an embodiment, the device may further include:
a text determining module 404 configured to determine whether the communication message is a text message; and
a conversion module 405 configured to convert the communication message to a text message when the communication message is determined not to be a text message.

In an exemplary embodiment, the determining module 402 is further configured to acquire at least one word from the communication message using a word segmentation algorithm; determine whether the at least one word belongs to a preset schedule word set that stores the preset schedule words; and determine that the communication message includes a preset schedule word when any one of the at least one word belongs to the set of reset schedule words.

In an exemplary embodiment, the information sending module 403 is further configured to send a query request to the first terminal including at least a second user identification when the communication message is determined to include a preset schedule word, such that the first terminal searches for contact information corresponding to the second user identification upon reception of the query request; and send the prompt information to the first terminal when query failure information from the first terminal is received.

In an exemplary embodiment, the information sending module 403 is further configured to send a query request to the second terminal including at least a first user identification when the communication message is determined to include a preset schedule word, such that the second terminal searches for contact information corresponding to the first user identification upon reception of the query request; and send the prompt information to the second terminal when query failure information from the second terminal is received.

In an exemplary embodiment, the information sending module 403 is further configured to acquire second data information corresponding to the second terminal when the communication message is determined to include a preset schedule word; determine whether the second data information includes the contact information; and send the prompt information to the first terminal when the second data information is determined not to include the contact information.

All the above optional technical solutions may form the optional embodiments of the disclosure in any combination, which will not be elaborated herein.

With respect to the devices in the above embodiments, the specific manners for performing operations for individual modules therein have been described in detail in the embodiments regarding the method, which will not be elaborated herein.

It should be noted that the above embodiment only illustrates the division of the functional modules when the device for processing a communication message provided by the embodiment processes the communication message. In practical applications, the functions described above may be allocated to different modules to be completed as required, that is, the internal structure of the device may be divided into different modules to complete part or all of the functions described above. In addition, the device for processing communication message and the method for processing a communication message pertain to a same concept, and the specific implementation of the device refers to method embodiment, which will not be elaborated herein.

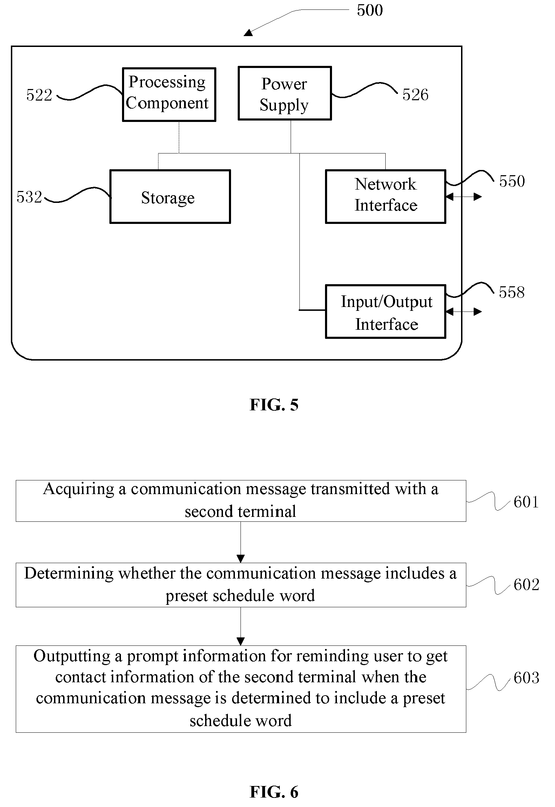

FIG. 5 is a block diagram illustrating a device 500 for processing a communication message according to an exemplary embodiment. For example, the device 500 may be implemented as a server. As shown in Fig. 5, the device 500 may include a processing component 522 having one or more processors, and storage resources represented by memory 532 for storing instructions, e.g., application programs, executable by the processing component 522. The application programs stored in the memory 532 may include one or more modules. Each module may include a set of instructions. Further, the processing component 522 may be configured to execute the sets of instructions and perform the method for processing a communication message described above.

The device 500 may also include a power component 526 to perform power management of the device 500, a wired or wireless network interfaces 550 to connect the device 500 to a network, an input/output (I/O) interface558. The device 500 may operate based on an operating systems stored in the memory 532, such as Windows Server™, Mac OS X™, Unix™, Linux™, FreeBSD™, or the like.

Fig. 6 is flow chart showing a method for processing a communication message according to an exemplary embodiment. As shown in Fig. 6, the method for processing a communication message may be performed in the first terminal, and may includes the following steps.

In step 601, a communication message transmitted with a second terminal is acquired.

In step 602, a determination as to whether the communication message includes a preset schedule word is made.

In step 603, prompt information is output when the communication message is determined to include a preset schedule word, the prompt information reminds a user of the first terminal to get contact information of a user of the second terminal.

In an exemplary embodiment, the communication message transmitted with the second terminal in step 601, for example, may be a communication message sent by the first terminal to the second terminal, or a communication message received by the first terminal from the second terminal, which is not limited by the disclosure.

With the method provided by the embodiment, by acquiring the communication message transmitted between a first terminal and a second terminal, determining whether the communication message includes a preset schedule word, and outputting prompt information when the communication message is determined to include a preset schedule word, at least one of the first and second terminals that receives the prompt information is able to present the prompt information to remind its user to acquire the contact information of the other user when the two users are negotiating a schedule and the reminded user may communicate with the other user based on the acquired contact information, which avoids communication inconvenience due to non-acquisition of the contact information of the other user.

In an exemplary embodiment, said determining whether the communication message includes a preset schedule word may include:
acquiring at least one word from the communication message using a word segmentation algorithm;
determining whether the at least one word belongs to a preset schedule word set that stores the preset schedule words; and
determining that the communication message includes a preset schedule word when any one of the at least one word is determined to belong to the set of reset schedule words.

In an exemplary embodiment, said outputting prompt information including:
querying the contact information corresponding the second terminal; and
outputting the prompt information when the query fails.

In an exemplary embodiment, said outputting prompt information including:
sending a first request to the server when the communication message is determined to include a preset schedule word, the first request is to acquire second data information corresponding to the second terminal from a server;
determining whether the second data information includes the contact information when receiving the second data information corresponding to the second terminal; and
outputting the prompt information when the second data information is determined not to include the contact information.

All the optional technical solutions may form the optional embodiments of the disclosure in any combination which will not be elaborated herein.

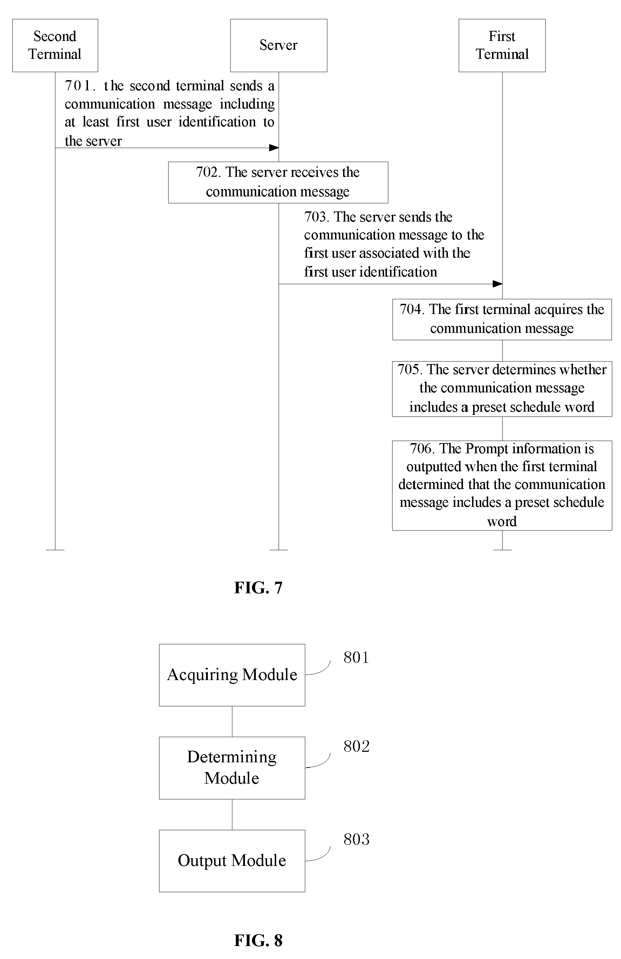

Fig.7 is flow chart showing a method for processing a communication message, according to an exemplary embodiment. As shown in Fig. 7, the method for processing a communication message may be implemented by a first terminal, a second terminal and a server. The embodiment is described taking a first terminal receiving communication message from a second terminal as an example. The method for processing a communication message may include the following steps.

In step 701, the second terminal sends a communication message including at least first user identification to the server.

In step 702, the server receives the communication message.

Based on the second user identification, the second terminal logins the server which maintains the user relationship chain for the second user identification, and the second terminal may acquire the user relationship chain of the second user identification by the social application and show the user relationship chain. When a selection operation for the first user identification of the user relationship chain made by the second user is detected by the second terminal, open the interactive interface with the first user identification, acquire the communication message inputted by the second user in the interactive interface, and send the communication message to the server, then the server may send the communication message to the first terminal including the first user identification, the communication message includes the first user identification and indicates that the communication message is the one sent by the first terminal to the second terminal.

In step 703, the server sends the communication message to the first user associated with the first user identification.

In step 704, the first terminal acquires the communication message.

According to the first user identification, the server may determine the first terminal associated with the second user identification and send the communication message to the first terminal. The communication message may include the second user identification, and the first terminal may present the communication message when receiving the communication message. The first user may view the second user identification to learn that the communication message is sent by the second user.

In step 705, the server determines whether the communication includes a preset schedule word.

In order to determine whether the first user and the second user are negotiating a schedule, the first terminal may determine whether the communication message includes a preset schedule word when receiving the communication message. The first user and the second user are determined to negotiate a schedule when the communication includes a preset schedule word, then the first user is reminded to acquire the contact information of the second user. The first user and the second user are determined not to negotiate a schedule when the communication doesn't include a preset schedule word, and then there is no need to remind the first user to acquire the contact information of the second user.

The specific progress for determining if the communication includes a preset schedule word is similar to the specific progress for determining if the communication includes a preset schedule word in step 304, which will not be elaborated herein.

In step 706, prompt information is outputted for reminding the user to acquire the contact information of the second terminal when the first terminal determined that the communication message includes a preset schedule word.

The first prompt information reminding the first user to acquire the contact information of the second user may be an instant messaging message or email and the like, which is not limited by the embodiment. For example, the first prompt information may be "Currently you are negotiating a dating matter, please make sure you have the phone number of the other side so as to avoid inconveniencing your appointment."

A prompt window presenting the prompt information is popped up or the interactive interface with the second terminal in which presenting the prompt information is presented when the first terminal output the prompts information.

The first user may view the prompt information when the first terminal presents the prompt information, and acquire the contact information of the second user based on the prompt information.

In addition, the first terminal may determine whether the first user has already acquired the contact information of the second user firstly, there is no need to output the prompt information if the first user has already acquired the contact information of the second user.

Accordingly, step 706 may include any one of the following steps (1) - (4).
(1) The contact information corresponding to the second terminal is searched when the first terminal determines that the communication message includes a preset schedule word, and the prompt information is outputted when the query fails.
   The specific progress for searching for the contact information corresponding to the second terminal by the first terminal is similar to what in step 305, which will not be elaborated herein.
(2) When determining that the communication message includes a preset schedule word, the first terminal may send a first request to the server, the first request requests the second data information corresponding to the second terminal. The server determines if the second data information includes the contact information upon reception of the second data information corresponding to the second terminal, and outputs the prompt information when the second data information is determined not to include a preset schedule word.
   When the first terminal determines that the communication message includes a preset schedule word, it sends a first request to the server, the first request requests the second data information corresponding to the second terminal. The server sends the second data information to the first terminal when it receives the first request, and when the first terminal receives the second data information, it may determine if the second data information include the contact information.
   The specific progresses for determining if the second data information includes a preset schedule word by the first terminal is similar to the specific progress for determining if the second data information includes a preset schedule word by the server in step 305, which will not be elaborated herein.
(3) when the first terminal determines that the communication message includes a preset schedule word, it may search for the contact information corresponding to the second terminal, send the first request to the server when the query fails, the first request requests the second data information corresponding to the second terminal, the server may determine if the second data information includes the contact information upon reception of the second data information corresponding to the second terminal, and output the prompt information when the second data information is determined not to include a preset schedule word.
(4) The first terminal determines if the communication message includes the contact information, and outputs the prompt information when the communication message is determined not to include the contact information.

Furthermore, in addition to output the prompt information, the first terminal may also send the prompt information to the server, and the server forwards the prompt information to the second terminal, then the second terminal may output the prompt information when receiving it so as to remind the second user to acquire the contact information of the first user.

It should be noted that the embodiment only illustrates that the first terminal determines if the communication message includes a preset schedule word after the second terminal sends a communication message to the first terminal via the server, however, in practical applications, it can also be done that the second terminal determines if the communication message includes a preset schedule word. That is, the steps 704-706 described above may also be performed after the second terminal acquired the communication message.

For example, the steps 704-706 described above may be performed before or after or when the second terminal sends the communication message to the server, which is not limited by the embodiment.

With the method provided by the embodiment, by acquiring a communication message transmitted with a second terminal, determining whether the communication message includes preset schedule word, and sending prompt information when the communication message is determined to include a preset schedule word, so as to remind its user to acquire the contact information of the other user when the two users are negotiating a schedule and the reminded user may communicate with the other user based on the acquired contact information, which avoids communication inconvenience due to non-acquisition of the contact information of the other user.

Fig. 8 is a block diagram illustrating a device for processing a communication message, according to an exemplary embodiment. As shown in Fig. 8, the device may include a acquiring module 801, a determining module 802 and a output module 803.

The acquiring module 801 may be configured to acquire a communication message transmitted with a second terminal;
The determining module 802 may be configured to determine whether the communication message includes a preset schedule word; and
The output module 803 may be configured to output prompt information when the communication message is determined to include a preset schedule word, the prompt information reminds a user of the at least one of the first terminal and the second terminal to get contact information of a user of the other terminal.

With the device provided by the embodiment, by acquiring the communication message transmitted with a second terminal, determining whether the communication message includes preset schedule word, and sending prompt information when the communication message is determined to include a preset schedule word, so as to remind its user to acquire the contact information of the other user when the two users are negotiating a schedule and the reminded user may communicate with the other user based on the acquired contact information, which avoids communication inconvenience due to non-acquisition of the contact information of the other user.

In an exemplary embodiment, the determining module 802may be further configured to acquire at least one word from the communication message using a word segmentation algorithm; determine whether the at least one word belongs to a preset schedule word set that stores the preset schedule words; and determine that the communication message includes a preset schedule word when any one of the at least one word is determined to belong to the set of reset schedule words.

In an exemplary embodiment, the output module 803may be further configured to query the contact information corresponding to the second terminal; and output the prompt information when the query fails.

In an exemplary embodiment, the output module 803 may be further configured to output a first request to the server when the communication message is determined to include a preset schedule word, the first request is to acquire second data information corresponding to the second terminal from a server; determine whether the second data information includes the contact information when receiving the second data information corresponding to the second terminal; and output the prompt information when the second data information is determined not to include the contact information.

All the above optional technical solutions may form the optional embodiments of the disclosure in any combination which will not be elaborated herein.

With respect to the devices in the above embodiments, the specific manners for performing operations for individual modules therein have been described in detail in the embodiments regarding the method, which will not be elaborated herein.

It should be noted that the above embodiment only illustrates the division of the functional modules when the device for processing a communication message provided by the embodiment performs the communication message. In practical applications, the functions described above may be allocated to different modules to be completed as required, that is, the internal structure of the device may be divided into different modules to complete part or all of the functions described above. In addition, the device for processing a communication message and the method for processing a communication message pertain to a same concept, and the specific implementation of the device refers to method embodiment, which will not be elaborated herein.

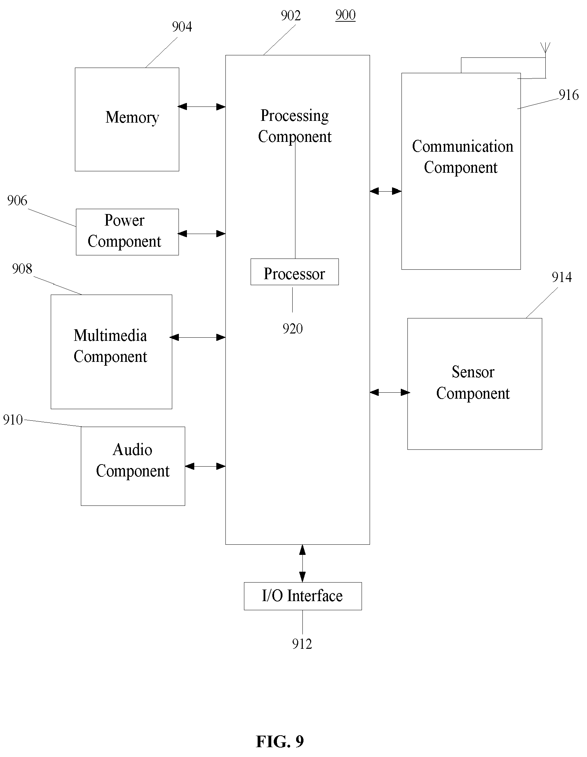

Fig. 9 is a block diagram of a device 900 for processing a communication messageaccording to an exemplary embodiment. For example, the device 900 may be a mobile phone, a computer, a digital broadcast terminal, a messaging device, a gaming console, a tablet, a medical device, an exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with show, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 808 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 800. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal show (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 802 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the show and the keypad, of the device 900, a change in position of the device 900 or a component of the device 900, a presence or absence of user contact with the device 800, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a terminal, causes the terminal to perform a method for processing a communication message as described in the present disclosure.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. A method for processing a communication message, comprising:
acquiring (201) a communication message transmitted between a first terminal and a second terminal;
sending (203) prompt information to at least one of the first terminal and the second terminal when the communication message is determined to include a preset schedule word, the prompt information reminding a user of the at least one of the first terminal and the second terminal to get contact information of a user of the other terminal.

2. The method of claim 1, wherein said acquiring a communication message transmitted between the first terminal and the second terminal comprises:
receiving a communication message sent by the first terminal to the second terminal; or
receiving a communication message sent by the second terminal to the first terminal.

3. The method of claim 1 or claim 2, wherein the method further comprises:
determining whether the communication message is a text message; and
converting the communication message to a text message when the communication message is determined not to be a text message.

4. The method of any preceding claim, wherein said determining whether the communication message includes a preset schedule word comprises:
acquiring at least one word from the communication message using a word segmentation algorithm;
determining whether the at least one word is included in a preset schedule word set that stores preset schedule words; and
determining that the communication message includes a preset schedule word when any one of the at least one word is determined to be included in the reset schedule word set.

5. The method of any preceding claim, wherein said sending prompt information to at least one of the first terminal and the second terminal when the communication message is determined to include a preset schedule word comprises:
sending a query request to the first terminal including at least a second user identification when the communication message is determined to include a preset schedule word, such that the first terminal searches for contact information corresponding to the second user identification upon reception of the query request; and
sending the prompt information to the first terminal when query failure information from the first terminal is received.

6. The method of any of claims 1 to 4, wherein said sending prompt information to at least one of the first terminal and the second terminal when the communication message is determined to include a preset schedule word comprises:
sending a query request to the second terminal including at least a first user identification when the communication message is determined to include a preset schedule word, such that the second terminal searches for contact information corresponding to the first user identification upon reception of the query request; and
sending the prompt information to the second terminal when query failure information from the second terminal is received.

7. The method of any of claims 1 to 4, wherein said sending prompt information to at least one of the first terminal and the second terminal when the communication message is determined to include a preset schedule word comprises:
acquiring second data information corresponding to the second terminal when the communication message is determined to include a preset schedule word;
sending the prompt information to the first terminal when the second data information is determined not to include the contact information.

8. The method of any of claims 1 to 4, wherein said sending prompt information to at least one of the first terminal and the second terminal when the communication message is determined to include a preset schedule word comprises:
acquiring first data information corresponding to the first terminal when the communication message is determined to include a preset schedule word;
sending the prompt information to the second terminal when the first data information is determined not to include the contact information.

9. A method for processing a communication message performed at a terminal, comprising:
acquiring a communication message transmitted with a second terminal;
outputting prompt information when the communication message is determined to include a preset schedule word, the prompt information reminding a user of the terminal to get contact information of a user of the second terminal.

10. The method of claim 9, wherein said determining whether the communication message includes a preset schedule word comprises:
acquiring at least one word from the communication message using a word segmentation algorithm;
determining whether the at least one word is included in a preset schedule word set that stores preset schedule words; and
determining that the communication message includes a preset schedule word when any one of the at least one word is determined to be included in the preset schedule word set.

11. The method of claim 9 or claim 10, wherein said outputting prompt information comprises:
searching for contact information corresponding the second terminal; and outputting the prompt information when the query fails.

12. The method of any of claims 9 to 11, wherein said outputting prompt information comprises:
sending a first request to a server when the communication message is determined to include a preset schedule word, the first request is to acquire second data information corresponding to the second terminal from a server;
determining whether the second data information includes the contact information upon reception of the second data information corresponding to the second terminal; and
outputting the prompt information when the second data information is determined not to include the contact information.

13. A device for processing a communication message, comprising:
an acquiring module configured to acquire a communication message transmitted between a first terminal and a second terminal;
a determining module configured to determine whether the communication message includes a preset schedule word;
an information sending module configured to send prompt information to at least one of the first terminal and the second terminal when the communication message is determined to include a preset schedule word, the prompt information reminding a user of the at least one of the first terminal and the second termina to get contact information of a user of the other terminal.

14. A device for processing a communication message, comprising:
an acquiring module configured to acquire a communication message transmitted with a terminal;
a determining module configured to determine whether the communication message includes a preset schedule word; and
an output module configured to output prompt information when the communication message is determined to include a preset schedule word, the prompt information reminding a user of the device to get contact information of a user of the terminal.

15. The device of claim 14, wherein the output module is further configured to search for the contact information corresponding to the terminal; and output the prompt information when the query fails.
